# NEUE EUROPÄISCHE PATENTSCHRIFT

(11) **EP 1 687 159 B2**
(45) Veröffentlichungstag und Bekanntmachung des Hinweises auf die Entscheidung über den Einspruch: **28.10.2015**
(45) Hinweis auf die Patenterteilung: 11.03.2009
(21) Anmeldenummer: 04765913.1
(22) Anmeldetag: 09.10.2004
(51) Int. Cl.: B60G 17/052

(54) **VENTILEINRICHTUNG FÜR EINE LUFTFEDERUNGSEINRICHTUNG FÜR EIN FAHRZEUG**
VALVE DEVICE FOR A PNEUMATIC SUSPENSION UNIT OF A VEHICLE
SYSTEME DE SOUPAPES DESTINE A UN SYSTEME DE SUSPENSION PNEUMATIQUE D'UN VEHICULE

(30) Priorität: 19.11.2003 DE 10354056
(43) Veröffentlichungstag der Anmeldung: 09.08.2006
(73) Patentinhaber: WABCO GmbH, 30453 Hannover (DE)
(72) Erfinder: STENDER, Axel, 31863 Coppenbrügge (DE); RISSE, Rainer, 30982 Pattensen (DE); LUCAS, Johann, 31319 Sehnde (DE); WITTE, Norbert, 31867 Lauenau (DE)
(86) Internationale Anmeldenummer: PCT/EP2004/011322
(87) Internationale Veröffentlichungsnummer: WO 2005/049346

(56) Entgegenhaltungen:
- EP-A- 0 520 148
- EP-A- 1 382 469
- WO-A2-2001/089863
- DE-A- 19 609 987
- DE-B4- 19 916 040
- GB-A- 2 237 780
- GB-A- 2 280 877
- US-A- 4 944 526
- US-A- 5 443 093
- US-A1- 2002 096 840
- US-A1- 2003 000 587

## Beschreibung

Die Erfindung betrifft eine Ventileinrichtung für eine Luftfederungseinrichtung für ein Fahrzeug gemäß dem Oberbegriff des Patentanspruchs 1.

Eine gattungsgemäße Ventileinrichtung ist aus der DE 42 02 729 A1 bekannt.

Luftfederungseinrichtungen für Fahrzeuge weisen üblicher Weise eine Einrichtung zur Niveauregelung des Fahrzeugaufbaus gegenüber dem Fahrwerk bzw. der Fahrbahn auf. Bezüglich solcher Niveauregelungseinrichtungen wird zwischen zwei Prinzipien unterschieden, nämlich zwischen einer rein mechanisch arbeitenden Niveauregelungseinrichtung mittels eines Luftfederventils einerseits und einer elektronisch gesteuerten Niveauregelungseinrichtung andererseits. Eine Niveauregelungseinrichtung mit Luftfederventil ist beispielsweise aus dem eingangs erwähnten Stand der Technik bekannt. Als ein Beispiel für eine elektronisch gesteuerte Niveauregelungseinrichtung sei die EP 0 779 167 B1 genannt.

Bei Niveauregelungseinrichtungen mit Luftfederventil ist zusätzlich zum Luftfederventil in der Regel ein mamanuell betätigbares Ventil vorgesehen, das häufig auch als Drehschieberventil bezeichnet wird. Mittels des Drehschieberventils kann von einer Bedienperson manuell unter Umgehung des Luftfederventils eine gewünschte Niveaulage des Fahrzeugaufbaus eingestellt werden, indem dieses Drehschieberventil in die Stellungen "Heben", "Senken" oder "Stop" gestellt wird. Hiermit kann z.B. eine für ein Beladen des Fahrzeuges an einer Laderampe gewünschte Niveaulage eingestellt werden. Ein solches Drehschieberventil weist zudem eine Stellung "Fahrt" auf, bei der das Luftfederventil wieder wirksam wird. Zum Rückstellen des manuellen Ventils aus der Stellung "Stop" in die Stellung "Fahrt" ist bei dem eingangs genannten Stand der Technik zusätzlich ein elektromagnetisch betätigbares Ventil vorgesehen.

Das Dokument GB 2 237 780 A offenbart ein Luftfederungssystem für ein Lastfahrzeug mit Luftfedern, einer Höhensteuereinrichtung, die an Luftfedern angeschlossen und pneumatisch mit einer Druckluftversorgung verbindbar ist, einer ersten Ventileinrichtung, wodurch die Höhensteuereinrichtung im Betrieb übersteuert oder umgangen werden kann, um die Höhe der Ladefläche des Fahrzeugs relativ zu einer Fahrzeugachse ausgehend von einer normalen Fahrhöhe zu verändern. Die erste Ventileinrichtung ist über eine zweite Ventileinrichtung an die Luftfedern angeschlossen, die zweite Ventileinrichtung weist eine erste und eine zweite Betriebsbedingung auf und ist an die Höhensteuerventileinrichtung gekoppelt, wodurch bei der ersten Bedingung die Luftfedern über die Höhensteuerventileinrichtung aufgeblasen/abgelassen werden können und bei der zweiten Bedingung die Luftfedern an die erste Ventileinrichtung angeschlossen werden, wodurch die Luftfedern aufgeblasen/abgelassen werden können.

Das Dokument EP 1 382 469 A2 offenbart ein Magnetventil für Nutzfahrzeuge mit Luftfederung mit mindestens zwei Anschlüssen, mit einer Spule und einem in der Spule geführten Anker, der mit einem Ventilkörper verbunden ist, der über die Bewegung des Ankers gegenüber mindestens einem dem Ventilkörper zugeordneten Ventilsitz steuerbar ist, wobei der Anker entsprechend dem Durchmesser des Ventilsitzes druckentlastet ausgebildet ist. Ein manuell betätigbarer Stößel ist zum willkürlichen Betätigen des zwischen dem Ventilkörper und dem Ventilsitz gebildeten Ventils vorgesehen.

Bei elektronisch gesteuerten Niveauregelungseinrichtungen erfolgt die Steuerung der Niveaulage ohnehin über elektromagnetisch betätigbare Ventile, sowohl bei elektronischer Regelung der Niveaulage als auch bei einem manuellen Eingriff über eine elektrische Bedieneinheit.

Trotz der überzeugenden Vorteile, die eine elektronisch gesteuerte Niveauregelungseinrichtung gegenüber der Ausführungsform mit Luftfederventil bietet, wie beispielsweise erheblich besserer Regelungskomfort und höhere Fahrsicherheit aufgrund ausgefeilter Regelungsal gorithmen, kommen in der Praxis aus Kostengründen immer noch Luftfederventile zum Einsatz.

Der Erfindung liegt daher die Aufgabe zugrunde, eine Ventileinrichtung für eine Luftfederungseinrichtung für ein Fahrzeug anzugeben, die auf einfache und kostengünstige Weise sowohl in einer Niveauregelungseinrichtung mit Luftfederventil als auch in einer elektronisch gesteuerten Niveauregelungseinrichtung angewendet werden kann.

Diese Aufgabe wird durch die in dem Patentanspruch 1 angegebene Erfindung gelöst. Weiterbildungen und vorteilhafte Ausgestaltungen der Erfindungen sind in den Unteransprüchen angegeben.

Die Erfindung hat den Vorteil, eine kostengünstige Universallösung sowohl für Niveauregelungseinrichtungen mit Luftfederventil als auch für elektronisch gesteuerte Niveauregelungseinrichtungen zu bieten. Die Erfindung kann als kompakter Ventilblock hergestellt werden, welcher einerseits separat verkauft werden kann, andererseits auch als eine mit einer elektronischen Steuereinrichtung verbundene kompakte elektronische Niveauregelungs-Einheit verkauft werden kann. Infolge der universellen Einsetzbarkeit der Ventileinrichtung ergeben sich bei Serienfertigung Kostenvorteile gegenüber unterschiedlichen Ventileinrichtungen für die verschiedenen Prinzipien der Niveauregelungseinrichtungen, da die erfindungsgemäße Ventileinrichtung infolge ihrer universellen Einsetzbarkeit in höherer Stückzahl gefertigt werden kann.

Ein weiterer Vorteil der Erfindung ist, dass ein aus Kostengründen zunächst mit einer erfindungsgemäßen Ventileinrichtung sowie einem Luftfederventil ausgestattetes Fahrzeug mit relativ wenig Aufwand auf eine elektronisch gesteuerte Niveauregelungseinrichtung umgerüstet werden kann. Hierbei kann die erfindungsgemäße Ventileinrichtung beibehalten werden und es muß lediglich das Luftfederventil gegen einen sogenannten Wegsensor zur Sensierung der Niveaulage des Fahrzeugaufbaus getauscht werden. Des Weiteren ist die Ventileinrichtung elektrisch mit einer elektronischen Steuereinrichtung zu verbinden. Die notwendige elektronische Steuereinrichtung ist hierbei in der Regel in einem Fahrzeug bereits vorgesehen, z. B. in Form eines Elektronikmoduls, welches für ein Antiblockiersystem vorgesehen ist und zusätzlich Anschlussmöglichkeiten für die erfindungsgemäße Ventileinrichtung und den Wegsensor bietet.

Bei Anwendung der erfindungsgemäßen Ventileinrichtung in einer elektronisch gesteuerten Niveauregelungseinrichtung besteht ein weiterer Vorteil darin, dass bereits manuelle Bedienelemente zum Belüften und Entlüften der Luftfederbälge, also zum manuellen Verändern der Niveaulage des Fahrzeugaufbaus, vorgesehen sind. Hierdurch ist auch bei fehlender Stromversorgung der elektronisch gesteuerten Niveauregelungseinrichtung eine manuelle Veränderung der Niveaulage durchführbar. Ein weiterer Vorteil hierbei ist, dass insbesondere für Anhängefahrzeuge keine Notwendigkeit besteht, eine bordeigene Batterie vorzusehen oder ein abgestelltes Anhängefahrzeug auf andere Weise extern mit Strom zu versorgen, um manuell die Niveaulage verändern zu können, z. B. an einer Laderampe.

Bei Anwendung der erfindungsgemäßen Ventileinrichtung in einer Niveauregelungseinrichtung mit Luftfederventil besteht ein weiterer Vorteil darin, dass bereits ein elektrisch betätigbares Ventil vorgesehen ist, mittels dessen die Regelungsfunktion des Luftfederventils z. B. bei Fahrzeugstillstand abgeschaltet werden kann, um eine manuelle Veränderung der Niveaulage zu ermöglichen, und mittels dessen bei Wiederantritt der Fahrt das Luftfederventil wieder aktiviert werden kann, um eine für den Fahrbetrieb des Fahrzeuges sichere Niveaulage zu gewährleisten.

Gemäß der Erfindung ist ein Relaisventil vorgesehen. Relaisventile sind relativ preisgünstig herstellbar und bieten einen großen Strömungsquerschnitt für die Belüftung und Entlüftung der Luftfederbälge, mithin sind also relativ schnelle Veränderungen der Niveaulage möglich. Gemäß der Erfindung ist das Relaisventil in dem Gehäuse der Ventileinrichtung angeordnet. Hierdurch kann ein kompakter Aufbau der Ventileinrichtung erreicht werden. Zudem entfällt bei der Installation der Ventileinrichtung im Fahrzeug eine gesonderte Verlegung von Druckluftleitungen zu dem Relaisventil.

Gemäß einer vorteilhaften Weiterbildung der Erfindung ist ein berührungslos arbeitender Wegsensor zur Sensierung des Abstandes der Ventileinrichtung von der Fahrbahn in dem Gehäuse vorgesehen. Der Wegsensor kann beispielsweise als Ultraschallsensor, als Radarsensor oder als ein nach dem Lichtreflexionsprinzip arbeitender Sensor ausgestaltet sein. Der Wegsensor ist infolge seiner Anordnung in dem Gehäuse der Ventileinrichtung bereits durch die Montage der Ventileinrichtung an dem Fahrzeug, was üblicher Weise am Fahrzeugrahmen geschieht, an einer geeigneten Stelle montiert, um ein die Niveaulage des Fahrzeugaufbaus charakterisierendes Signal abzugeben. Eine gesonderte Montage und Verkabelung des Wegsensors kann somit eingespart werden.

Die Erfindung wird nachfolgend unter Nennung weiterer Vorteile anhand von Ausführungsbeispielen und unter Verwendung von Zeichnungen näher erläutert.

Es zeigen
- Fig. 1: eine erste Ausführungsform einer nicht-erfindungsgemäßen Ventileinrichtung bei Verwendung in einer elektronisch gesteuerten Niveauregelungseinrichtung und
- Fig. 2: die nicht-erfindungsgemäße Anwendung der zuvor genannten Ventileinrichtung in einer Niveauregelungseinrichtung mit Luftfederventil und
- Fig. 3: eine zweite Ausführungsform einer nicht-erfindungsgemäßen Ventileinrichtung und
- Fig. 4: eine Ausführungsform der erfindungsgemäßen Ventileinrichtung.

In den Figuren werden gleiche Bezugszeichen für einander entsprechende Teile verwendet.

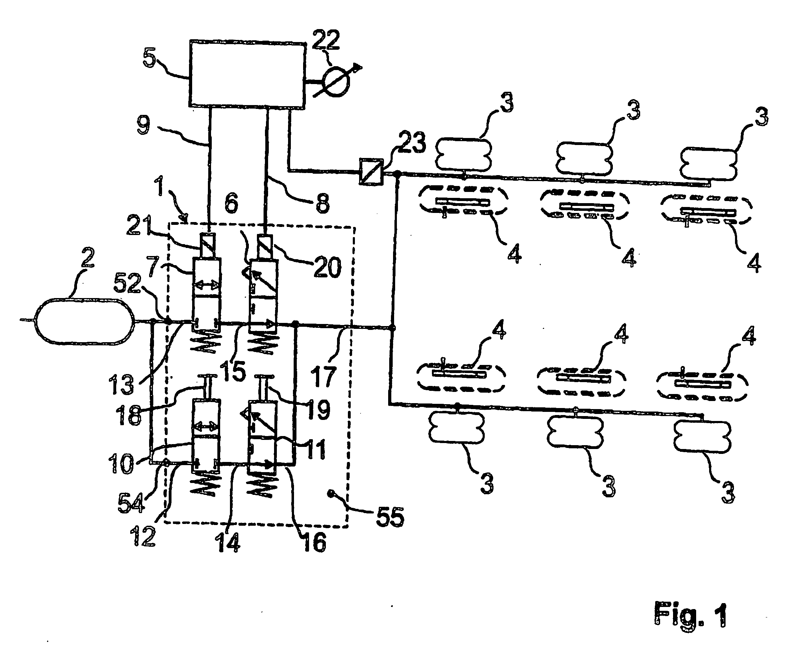

Die in der Fig. 1 dargestellte Luftfederungseinrichtung für ein Fahrzeug weist Luftfederbälge (3) auf, die in dem Fahrzeug zur Abstützung des Fahrzeugaufbaus gegenüber den Rädern (4) bzw. Achsen des Fahrzeuges vorgesehen sind. Die Luftfederungseinrichtung weist des weiteren eine elektronisch gesteuerte Niveauregelungseinrichtung (1, 5, 22, 23) auf, welche zur Belüftung der Luftfederbälge (3) einen Druckluftzufluß von einer mit der Niveauregelungseinrichtung verbundenen Druckmittelquelle (2) zu den Luftfederbälgen (3) und zur Entlüftung der Luftfederbälge (3) einen Druckluftabfluß von den Luftfederbälgen (3) in die Atmosphäre steuert.

Die elektronisch gesteuerte Niveauregelungseinrichtung (1, 5, 22, 23) weist als elektronische Steuereinrichtung ein elektronisches Steuergerät (5) auf, das von einer in der Fig. 1 nicht dargestellten elektrischen Energiequelle zu versorgen ist. Das elektronische Steuergerät (5) empfängt von einem Wegsensor (22), der zur Ermittlung des Abstands des Fahrzeugaufbaus von einem Bezugspunkt bezüglich der Räder (4) dient und somit die Niveaulage des Fahrzeugaufbaus bestimmt, ein Niveaulagensignal über eine elektrische Leitung. Der Wegsensor (22) kann beispielsweise als Ultraschallsensor, als Radarsensor oder als ein nach dem Lichtreflexionsprinzip arbeitender Sensor ausgestaltet sein.

Des weiteren empfängt das elektronische Steuergerät (5) von einem Drucksensor (23) ein Drucksignal über eine elektrische Leitung. Der Drucksensor (23) ist mit druckseitig mit den Luftfederbälgen (3) verbunden. Das abgegebene Drucksignal gibt somit den in den Luftfederbälgen (3) vorliegenden Luftdruck an.

Das elektronische Steuergerät (5) ist über elektrische Leitungen (8, 9) mit einer Ventileinrichtung (1) verbunden. Die Ventileinrichtung (1) weist ein Gehäuse (55) auf, in dem ein manuell betätigbares Belüftungsventil (10) zum Belüften der Luftfederbälge (3), ein manuell betätigbares Entlüftungsventil (11) zum Entlüften der Luftfederbälge (3), ein erstes über die Leitung (9) elektrisch betätigbares Ventil (7) sowie ein zweites über die Leitung (8) elektrisch betätigbares Ventil (6) angeordnet ist. Die elektrisch betätigbaren Ventile (6, 7) sind von dem elektronischen Steuergerät (5) durch Bestromung jeweils eines Elektromagneten (20, 21) über die elektrischen Leitungen (8, 9) betätigbar.

Gemäß einer vorteilhaften Weiterbildung weist das Gehäuse (55) separate Druckluftanschlüsse (52, 54) für die Druckluftversorgung der elektrisch betätigbaren Ventile (6, 7) einerseits und der manuell betätigbaren Ventile (10, 11) andererseits aus einer Druckmittelquelle (2) auf. Hierdurch ist die Ventileinrichtung (1) besonders flexibel einsetzbar. In der Anwendung der Ventileinrichtung (1) in einer elektronisch gesteuerten Niveauregelungseinrichtung, wie in der Fig. 1 dargestellt, sind vorteilhaft die Druckluftanschlüsse (52, 54) miteinander verbunden. Hierbei ist das erste elektrisch betätigbare Ventil (7) über den Druckluftanschluß (52) mit der Druckmittelquelle (2) verbunden. Weiterhin ist das manuell betätigbare Belüftungsventil (10) über den Druckluftanschluß (54) mit der Druckmittelquelle (2) verbunden.

In einer vorteilhaften Ausgestaltung sind in dem Gehäuse (55) zusätzlich das elektronische Steuergerät (5) sowie der Drucksensor (23) angeordnet. Hierdurch ergibt sich eine kompakte elektronisch gesteuerte Niveauregelungseinrichtung, die mit wenig Aufwand in einem Fahrzeug zu installieren ist. Gemäß einer weiteren vorteilhaften Ausgestaltung der Erfindung ist in dem Gehäuse (55) zusätzlich der Wegsensor (22) angeordnet. Hierdurch ist eine weitere Verringerung des Installationsaufwands der Niveauregelungseinrichtung in dem Fahrzeug erzielbar.

Das elektronische Steuergerät (5) ermittelt nach vorgegebenen Algorithmen, ob aufgrund der ermittelten Niveaulage des Fahrzeugaufbaus eine Belüftung oder eine Entlüftung der Luftfederbälge (3) erforderlich ist, um eine gewünschte Soll-Niveaulage einzuhalten, und bewirkt bei Bedarf durch Betätigung der elektrisch betätigbaren Ventile (6, 7) die Belüftung oder Entlüftung der Luftfederbälge (3), um die mittels des Wegsensors (22) ermittelte Niveaulage an die Soll-Niveaulage anzupassen.

Das als 3/2-Wegeventil ausgebildete Ventil (6) dient als kombiniertes Einlaß-/Auslaß-Ventil, welches im unbestromten Zustand des Elektromagneten (20), wie in der Fig. 1 dargestellt, eine Einlaßstellung und im bestromten Zustand des Elektromagneten (20) eine Auslaßstellung annimmt. Das als 2/2-Wegeventil ausgebildete Ventil (7) dient als Halte-Ventil, welches im unbestromten Zustand des Elektromagneten (21), wie in der Fig. 1 dargestellt, eine Absperrstellung und im bestromten Zustand des Elektromagneten (21) eine Durchlaßstellung annimmt. Für eine Belüftung der Luftfederbälge (3) schaltet das elektronische Steuergerät (5) das Einlaß-/Auslaß-Ventil (6) in die Einlaßstellung und zusätzlich das Halte-Ventil (7) in die Durchlaßstellung. Hierdurch wird die Druckmittelquelle (2) mit den Luftfederbälgen (3) verbunden, so daß Druckluft von der Druckmittelquelle (2) über die Druckluftleitungen (13, 15, 17) und die Ventile (6, 7) in die Luftfederbälge (3) fließen kann. Für eine Entlüftung der Luftfederbälge (3) schaltet das elektronische Steuergerät (5) das Einlaß-/Auslaß-Ventil (6) in die Auslaßstellung und zusätzlich das Halte-Ventil (7) in die Absperrstellung. Hierdurch wird die Druckmittelquelle (2) abgesperrt, und die Luftfederbälge (3) werden mit einem Entlüftungsanschluß des Einlaß-/Auslaß-Ventils (6) verbunden, so daß Druckluft von den Luftfederbälgen (3) über die Druckluftleitung (17) und das Ventil (6) in die Atmosphäre fließen kann. Zum Halten des in den Luftfederbälgen (3) vorhandenen Luftdrucks steuert das elektronische Steuergerät (5) das Halte-Ventil (7) in die Absperrstellung und das Einlaß-/Auslaß-Ventil (6) in die Einlaßstellung.

Bei der in der Fig. 1 dargestellten Luftfederungseinrichtung werden sämtliche Luftfederbälge (3) gemeinsam gesteuert und weisen immer denselben Druck auf. Es ist ebenfalls üblich, die Luftfederbälge zu Radgruppen oder Achsgruppen zusammenzufassen oder auch jeden Luftfederbalg einzeln zu steuern. In einem solchen Fall ist die elektronisch gesteuerte Niveauregelungseinrichtung um entsprechende Ventile zur Einzelsteuerung der Luftfederbälge bzw. der Gruppen von Luftfederbälgen zu erweitern.

Zusätzlich zu den bereits erläuterten Teilen der Luftfederungseinrichtung sind als manuelle Betätigungselemente zwei Taster (18, 19) vorgesehen, durch deren manuelle Betätigung auch bei fehlender Stromversorgung der elektronisch gesteuerten Niveauregelungseinrichtung (1) bzw. des elektronischen Steuergeräts (5) eine Belüftung und/oder Entlüftung der Luftfederbälge (3) durchführbar ist.

Gemäß einer vorteilhaften Ausgestaltung sind in einem zu den elektrisch betätigbaren Ventilen (6, 7) parallelen, die elektrisch betätigbaren Ventile (6, 7) umgehenden Druckluftzweig (12, 14, 16) eine über die manuellen Betätigungselemente (18, 19) die manuell betätigbaren Ventile (10, 11) vorgesehen. Die manuell betätigbaren Ventile (10, 11) sind vorteilhaft in Form eines pneumatischen 2/2-Wegeventile (10) und eines pneumatischen 3/2-Wegeventils (11) ausgebildet. Derartige Wegeventile sind einfach und kostengünstig herzustellen und sehr zuverlässig im Gebrauch.

Gemäß einer vorteilhaften Ausgestaltung sind die Taster (18, 19) mechanisch mit den pneumatischen Wegeventilen (10, 11) verbunden. Über die Taster (18, 19) sind die Wegeventile (10, 11) gegen die Kraft jeweils einer Rückstellfeder betätigbar. Das Wegeventil (10) dient dabei als Belüftungsventil, welches im unbetätigten Zustand des Tasters (18), wie in der Fig. 1 dargestellt, eine Absperrstellung und im betätigten Zustand des Tasters (18) eine Einlaßstellung annimmt. Das Wegeventil (11) dient als kombiniertes Entlüftungsventil, welches im unbetätigten Zustand des Tasters (19), wie in der Fig. 1 dargestellt, eine Durchlaßstellung und betätigten Zustand des Tasters (19) eine Entlüftungsstellung annimmt.

Bei fehlender Stromversorgung kann eine manuelle Veränderung der Niveaulage durch Belüften bzw. Entlüften der Luftfederbälge (3) wie folgt vorgenommen werden:

Für ein Belüften wird der Taster (18) manuell betätigt, d.h. das Wegeventil (10) wird in die Einlaßstellung gestellt. Hierdurch kann Druckluft von der Druckmittelquelle (2) über die Druckluftleitungen (12, 14, 16) durch das Wegeventil (10) sowie das im unbetätigten Zustand des Tasters (19) in der Durchlaßstellung befindliche Wegeventil (11) zu den Luftfederbälgen (3) fließen. Wird ein Halten des Luftdrucks bzw. der Niveaulage gewünscht, wird einfach der Taster (18) losgelassen, wodurch der Druckmittelfluß abgesperrt wird. Für ein Entlüften wird der Taster (19) manuell betätigt, d.h. das Wegeventil (11) wird in die Entlüftungsstellung gestellt. Hierdurch kann Druckluft aus den Luftfederbälgen (3) über die Druckluftleitung (16) und über einen Entlüftungsanschluß des Wegeventils (11) in die Atmosphäre ausströmen. Wird aus diesem Zustand heraus ein Halten des Luftdrucks bzw. der Niveaulage gewünscht, wird einfach der Taster (19) losgelassen.

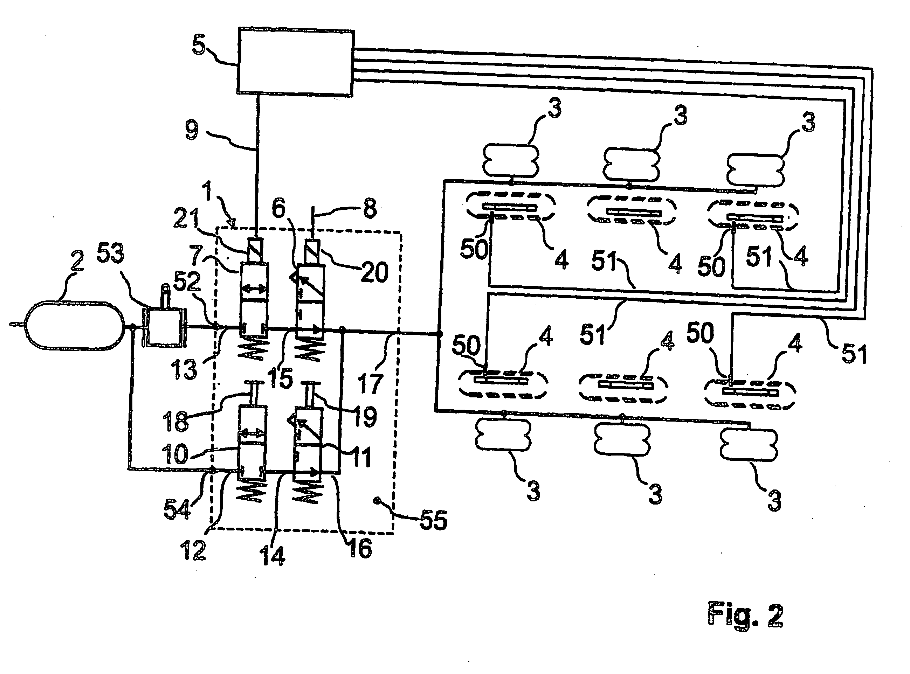

Fig. 2 zeigt die Verwendung der zuvor erläuterten Ventileinrichtung (1) in einer Luftfederungseinrichtung mit einem Luftfederventil (53). Wie erkennbar, sind in dieser Anwendung der Ventileinrichtung (1) die Druckluftanschlüsse (52, 54) nicht miteinander verbunden. Der Druckluftanschluß (52) ist an das Luftfederventil (53) angeschlossen, das seinerseits an die Druckmittelquelle (2) angeschlossen ist. Der Druckluftanschluß (54) ist direkt an die Druckmittelquelle (2) angeschlossen. Hierdurch ist einerseits eine manuelle Veränderung der Niveaulage durch Betätigung der Taster (18, 19), wie zuvor erläutert, unter Umgehung des Luftfederventils (53) möglich.

Das Luftfederventil (53) ist über die elektrisch betätigbaren Ventile (6, 7) mit den Luftfederbälgen verbunden. Das elektrisch betätigbare Ventil (7) ist in dieser Anwendung der Ventileinrichtung (1) über die elektrische Leitung (9) mit einer elektronischen Steuereinrichtung (5) verbunden, die in diesem Fall als ein in dem Fahrzeug bereits für andere Zwecke vorgesehenes Elektronikmodul ausgebildet ist. Das Elektronikmodul (5) führt beispielsweise die Funktionen eines Antiblockiersystems aus und ist zu diesem Zweck über elektrische Leitungen (51) mit Geschwindigkeitssensoren (50) zur Ermittlung der Drehgeschwindigkeiten der Räder (4) sowie mit nicht dargestellten Bremsdruck-Regelventilen verbunden. Zusätzlich bietet das Elektronikmodul (5) Anschlussmöglichkeiten für die Ventileinrichtung (1) und den Wegsensor (22). Das Elektronikmodul (5) wertet die Signale der Geschwindigkeitssensoren (50) aus und leitet daraus ein Signal ab, das anzeigt, ob sich das Fahrzeug im Stillstand oder in Fahrt befindet. Im Stillstand schaltet das Elektronikmodul (5) das elektrisch betätigbare Ventil (7) in die Absperrstellung, so dass das Luftfederventil (53) unwirksam ist. Wenn sich das Fahrzeug im Fahrtzustand befindet, schaltet das Elektronikmodul (5) das elektrisch betätigbare Ventil (7) in die Durchlaßstellung, so dass das Luftfederventil (53) mit den Luftfederbälgen (3) verbunden ist und eine Niveauregelung des Fahrzeugaufbaus bewirken kann. Das elektrisch betätigbare Ventil (6) wird in dieser Anwendung der Ventileinrichtung (1) nicht benutzt.

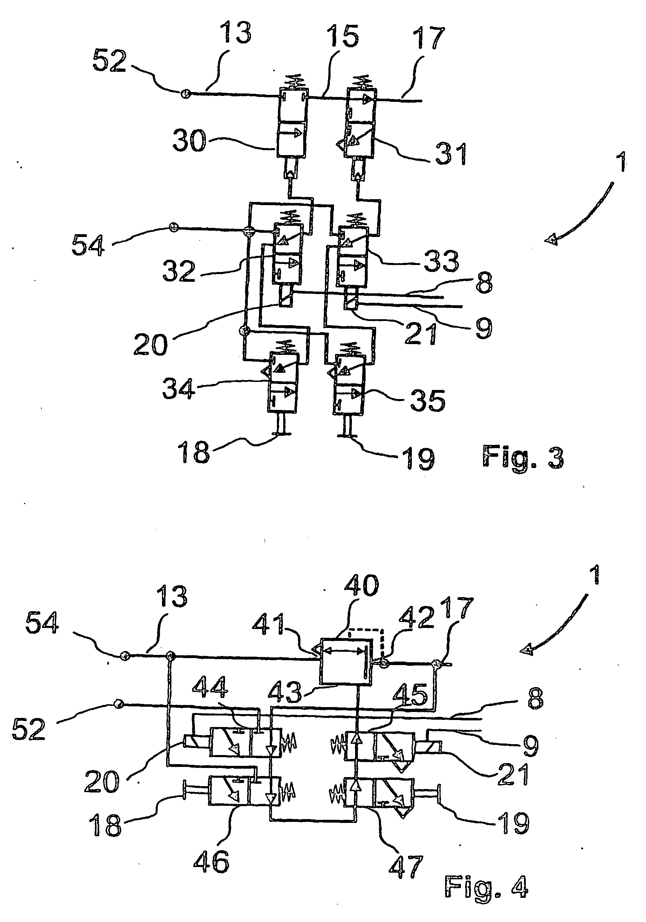

In der Fig. 3 ist eine weitere Ausgestaltung der in der Fig. 1 bzw. Fig. 2 dargestellten Luftfederungseinrichtung dargestellt, wobei in der Fig. 3 ausschnittsweise nur der die Ventileinrichtung (1) betreffende Teil der Luftfederungseinrichtung dargestellt ist. Die übrigen Teile der Luftfederungseinrichtung entsprechen der Fig. 1 bzw. Fig. 2.

Gemäß Fig. 3 sind als elektrisch betätigbare Ventile zwei 2/2-Wegeventile (32, 33) vorgesehen, die analog zu der Darstellung der Fig. 1 über Elektromagneten (20, 21) und elektrische Leitungen (8, 9) von dem elektronischen Steuergerät (5) betätigbar sind. Als manuell betätigbare Ventile sind zwei 2/2-Wegeventile (34, 35) vorgesehen, welche über die bereits erwähnten Taster (18, 19) manuell betätigbar sind. Die Ventile (32, 33, 34, 35) sind eingangsseitig mit dem in allen Anwendungsfällen der Ventileinrichtung (1) mit der Druckluftquelle (2) zu verbindenden Druckluftanschluß (54) verbunden.

Gemäß einer vorteilhaften Ausgestaltung ist gemäß Fig. 3 zusätzlich eine Servoventileinrichtung (30, 31) zur Belüftung und/oder Entlüftung der Luftfederbälge (3) vorgesehen, wobei die Servoventileinrichtung (30, 31) wenigstens durch die elektrisch betätigbaren Ventile (32, 33) und durch manuelle Betätigung der manuellen Betätigungselemente (18, 19) betätigbar ist, hier indirekt über Druckluft-Betätigung durch die Wegeventile (34, 35).

Die Servoventileinrichtung (30, 31) besteht aus einem Druckmittel-betätigbaren 2/2-Wegeventil (30) und einem ebenfalls Druckmittel-betätigbaren 3/2-Wegeventil (31). Das Ventil (30) dient als Halte-Ventil, das Ventil (31) dient als kombiniertes Einlaß-/Auslaß-Ventil, wobei die Funktionen der Ventile (30, 31) jeweils den bezüglich der Ventile (6, 7) der Fig. 1 bereits erläuterten Funktionen entsprechen. Im Unterschied zu den Ventilen (6, 7) sind die Ventile (30, 31) über jeweilige Druckmittel-Steuereingänge durch das Druckmittel betätigbar. Das Halte-Ventil (30) ist mit seinem Druckmittel-Steuereingang mit Druckmittelausgängen der Ventile (32, 34) verbunden. Der Druckmittel-Steuereingang des Einlaß-/Auslaß-Ventils (31) ist mit Druckmittelausgängen der Ventile (33, 35) verbunden. Das Ventil (30) ist über die Druckluftleitung (13) mit dem je nach Anwendungsfall mit der Druckluftquelle (2) bzw. dem Luftfederventil (53) zu verbindenden Druckluftanschluß (52) verbunden.

Die Steuerung der Niveaulage durch geeignete Beaufschlagung der elektrisch betätigbaren Ventileinrichtung (32, 33) erfolgt wie bereits zu der Fig. 1 beschrieben. Hierbei wirken die elektrisch betätigbaren Ventile (32, 33) jeweils als Vorsteuerventile für die Ventile (30, 31). Für die manuelle Betätigung ist, ebenfalls wie bereits zu der Fig. 1 beschrieben, für eine Belüftung der Luftfederbälge (3) der Taster (18) manuell zu betätigen, für eine Entlüftung ist der Taster (19) manuell zu betätigen. Hierbei wirken die Ventile (34, 35) ebenfalls jeweils als Vorsteuerventile für die Ventile (30, 31). Bei einer Belüftung der Luftfederbälge (3) strömt Druckluft von der Druckluftquelle (2) über die Druckluftleitungen (13, 15, 17) zu den Luftfederbälgen (3). Bei einer Entlüftung strömt die Druckluft von den Luftfederbälgen (3) über die Druckluftleitung (17) über einen Entlüftungsanschluß des Einlaß-/Auslaß-Ventils (31) in die Atmosphäre.

In dem Anwendungsfall der Ventileinrichtung (1) mit einem Luftfederventil (53) schaltet das Elektronikmodul (5) im Fahrzeug-Stillstand das Ventil (30) durch Nichtbetätigung des elektrisch betätigbaren Ventils (32) in die Absperrstellung, so dass das Luftfederventil (53) unwirksam ist. Wenn sich das Fahrzeug im Fahrtzustand befindet, schaltet das Elektronikmodul (5) das Ventil (30) durch Betätigung des elektrisch betätigbaren Ventils (32) in die Durchlaßstellung, so dass das Luftfederventil (53) mit den Luftfederbälgen (3) verbunden ist und eine Niveauregelung des Fahrzeugaufbaus bewirken kann. Das elektrisch betätigbare Ventil (33) wird in dieser Anwendung der Ventileinrichtung (1) nicht benutzt.

In der Fig. 4 ist eine vorteilhafte Ausgestaltung der erfindungsgemäßen Luftfederungseinrichtung dargestellt, wobei wie in der Fig. 3 nur der die Ventileinrichtungen betreffende Teil der Luftfederungseinrichtung dargestellt ist. Die übrigen Teile der Luftfederungseinrichtung entsprechen der Fig. 1 bzw. Fig. 2.

In der Ausgestaltung gemäß Fig. 4 ist als Servoventileinrichtung eine Relaisventileinrichtung (40) vorgesehen, welche die Eigenschaft hat, den an einem Drucksteuereingang (43) anliegenden Druck an einem Druckluftausgang (42) in gleicher Druckhöhe auszugeben. Zwecks Entlüftung von Druckluft aus den Luftfederbälgen (3) in die Atmosphäre weist die Relaisventileinrichtung (40) einen Entlüftungsanschluß auf. Zur Zufuhr von Druckluft zu den Luftfederbälgen (3) ist die Relaisventileinrichtung (40) mit einem Druckmitteleingangsanschluß (41) über die Druckluftleitung (13) mit dem in allen Anwendungsfällen der Ventileinrichtung (1) mit der Druckluftquelle (2) zu verbindenden Druckluftanschluß (54) verbunden.

Die elektrisch betätigbaren Ventile sind gemäß Fig. 4 als ein kombiniertes Belüften-/Halten-Ventil (44), das als 3/2-Wegeventil ausgebildet ist, sowie ein Entlüftungsventil (45), das als 2/2-Wegeventil ausgebildet ist, ausgestaltet, welche jeweils über Elektromagnete (20, 21) von dem elektronischen Steuergerät (5) betätigbar sind. Die manuell betätigbare Ventileinrichtung weist analog zu der vorgenannten elektrisch betätigbaren Ventileinrichtung ebenfalls ein kombiniertes Belüften-/Halten-Ventil (46) auf, das als 3/2-Wegeventil ausgebildet ist, sowie ein Entlüftungsventil (47), das als 2/2-Wegeventil ausgebildet ist, welche jeweils durch die Taster (18, 19) manuell betätigbar sind. Das elektrisch betätigbare Belüften-/Halten-Ventil (44) ist mit einem Druckmitteleingangsanschluß mit dem Druckluftanschluß (52) verbunden. Das manuell betätigbare Belüften-/Halten-Ventil (46) ist mit einem Druckmitteleingangsanschluß über die Druckluftleitung (13) mit dem Druckluftanschluß (54) verbunden. Der Drucksteuereingang (43) der Relaisventileinrichtung (40) ist über das Entlüftungsventil (45), das Entlüftungsventil (47), das Belüften-/Halten-Ventil (46) sowie das Belüften-/Halten-Ventil (44) auf den Druckluftausgang (42) der Relaisventileinrichtung (40) zurückgeführt. Sofern die elektrisch betätigbaren Ventile (44, 45) und die manuell betätigbaren Ventile (46, 47) unbetätigt sind, wie in der Fig. 4 dargestellt, sind der Drucksteuereingang (43) und der Druckluftausgang (42) der Relaisventileinrichtung (40) miteinander verbunden. Damit führt die Relaiseinrichtung (40) eine Druckhaltefunktion aus, derart, daß der in der Druckluftleitung (17) vorliegende Druck gehalten wird.

Im Anwendungsfall der elektronisch gesteuerten Niveauregelung beaufschlagt das elektronische Steuergerät (5) im Rahmen der Niveauregelungsfunktionen über die elektrische Leitung (8) den Elektromagneten (20) zur Betätigung des Ventils (44), wenn eine Belüftung der Luftfederbälge (3) durchgeführt werden soll. Hierdurch wird Druckluft aus der Druckmittelquelle (2) auf den Drucksteuereingang (43) gegeben. Die Relaisventileinrichtung (40) versucht, den an dem Drucksteuereingang (43) vorliegenden Druck an dem Druckluftausgang (42) einzustellen, indem die Relaisventileinrichtung (40) Druckluft von dem Druckmitteleingangsanschluß (41) zu dem Druckluftausgang (42) durchläßt. Wenn eine Entlüftung der Luftfederbälge (3) durchgeführt werden soll, betätigt das elektronische Steuergerät (5) über die elektrische Leitung (9) den Elektromagneten (21) zur Betätigung des Ventils (45). Hierdurch wird der Drucksteuereingang (43) der Relaisventileinrichtung (40) mit dem Entlüftungsanschluß des Entlüftungsventils (45) und damit mit der Atmosphäre verbunden. Die Relaisventileinrichtung (40) versucht, den an dem Drucksteuereingang (43) vorliegenden Druck an dem Druckluftausgang (42) einzustellen, indem die Relaisventileinrichtung (40) Druckluft von den Luftfederbälgen (3) über den Entlüftungsanschluß der Relaisventileinrichtung (40) in die Atmosphäre ausströmen läßt.

Für eine manuelle Veränderung der Niveaulage ist zum Belüften der Luftfederbälge (3) der Taster (18) und zum Entlüften der Luftfederbälge (3) der Taster (19) manuell zu betätigen. Hierbei bewirkt die Betätigung des Tasters (18) ein Umschalten des Belüften-/Halten-Ventil (46), derart, daß der Drucksteuereingang (43) der Relaisventileinrichtung (40) mit der Druckmittelquelle (2) verbunden wird. Die Relaisventileinrichtung (40) versucht wiederum, den an dem Drucksteuereingang (43) vorliegenden Druck an dem Druckluftausgang (42) einzustellen, indem die Relaisventileinrichtung (40) Druckluft von dem Druckmitteleingangsanschluß (41) zu dem Druckluftausgang (42) durchläßt. Eine Betätigung des Tasters (19) bewirkt ein Umschalten des Entlüftungsventils (47), derart, daß der Drucksteuereingang (43) der Relaisventileinrichtung (40) mit dem Entlüftungsanschluß des Entlüftungsventils(47) verbunden wird. Die Relaisventileinrichtung (40) versucht wiederum, den an dem Drucksteuereingang (43) vorliegenden Druck an dem Druckluftausgang (42) einzustellen, indem die Relaisventileinrichtung (40) Druckluft von den Luftfederbälgen (3) über den Entlüftungsanschluß der Relaisventileinrichtung (40) in die Atmosphäre ausströmen läßt.

Im Anwendungsfall der mechanisch arbeitenden Niveauregelungseinrichtung mit einem Luftfederventil ist auch bei der Ausführungsform gemäß Fig. 4 das Luftfederventil (53) an dem Druckluftanschluß (52) angeschlossen. In diesem Fall bewirkt das Luftfederventil (53) bei ein in Durchlaßstellung geschaltetem Ventils (44) die Niveauregelung durch Veränderung des Drucks am Drucksteuereingang (43).

Gemäß einer vorteilhaften Weiterbildung der Erfindung ist die elektronisch gesteuerte Niveauregelungseinrichtung (1) zum Empfang wenigstens einer manuell vorzugebenden Eingangsgröße geeignet, wobei die Eingangsgröße auch bei vorhandener Stromversorgung der elektronisch gesteuerten Niveauregelungseinrichtung (1) über das manuelle Betätigungselement (18, 19) vorgebbar ist. Eine solche Eingangsgröße ist vorzugsweise eine manuell vorgegebene Niveaulage bzw. eine Niveaulagenveränderung gegenüber der bisher eingestellten Niveaulage. Dies hat den Vorteil, daß zu jeder Zeit dieselben Betätigungselemente für die Vorgabe der Eingangsgröße verwendet werden können, unabhängig davon, ob die Niveauregelungseinrichtung mit elektrischer Energie versorgt wird oder nicht. Zusätzliche Betätigungselemente wie etwa elektrische Tasten sind nicht notwendig. Hierdurch wird zudem eine einfache Art der Bedienung ermöglicht, da ein Bediener nicht darauf achten muß, je nach Zustand der Stromversorgung unterschiedlichen Bedienelemente zu betätigen.

Gemäß einer vorteilhaften Weiterbildung der Erfindung ist die elektronisch gesteuerte Niveauregelungseinrichtung (1) zum Empfang wenigstens eines Wegsignals von einem Wegsensor (22) sowie eines Drucksignals von einem Drucksensor (23) geeignet. Die Niveauregelungseinrichtung (1) bzw. das elektronische Steuergerät (5) wertet das Wegsignal und das Drucksignal fortwährend aus und erkennt anhand des Verlaufs dieser Signale, ob eine Eingangsgröße, etwa eine Niveaulagenveränderung, manuell vorgegeben wurde. In vorteilhafter Weise prüft das elektronische Steuergerät (5) dabei, ob sich bei im wesentlichen gleichbleibendem Drucksignal das Wegsignal verändert. Dies ist ein Indiz für eine manuell vorgegebene Veränderung der Niveaulage, bei der bei im wesentlichen gleichbleibendem Fahrzeuggewicht eine bestimmte Luftmenge aus den Luftfederbälgen (3) abgelassen wurde oder darin eingesteuert wurde. Da bei einer solchen manuellen Niveaulagenveränderung von einem Gleichbleiben der Beladung des Fahrzeuges und damit des Fahrzeuggewichts ausgegangen werden kann, ändert sich infolgedessen der Druck in den Luftfederbälgen (3) nicht, sondern durch eine Niveaulagenveränderung wird lediglich das darin gespeicherte Druckluftvolumen verändert. Erkennt das elektronische Steuergerät jedoch, daß sich das Drucksignal und das Wegsignal verändern, so ist dies ein Indiz dafür, daß die Beladung des Fahrzeugs geändert wurde. In diesem Fall wird von dem elektronischen Steuergerät (5) nicht auf eine manuell vorgegebene Eingangsgröße geschlossen.

Die Ventileinrichtungen gemäß Fig. 3 und Fig. 4 sind sowohl bei einer mechanisch arbeitenden Niveauregelungseinrichtung mit einem Luftfederventil als auch bei einer elektronisch gesteuerten Niveauregelungseinrichtung anwendbar.

Gemäß einer vorteilhaften Ausgestaltung der Erfindung kann statt zweier separater Taster (18, 19) auch ein von konventionellen Drehschieberventilen bekannter Drehhebel verwendet werden, der in einer Endstellung ein Belüften der Luftfederbälge (3) und in einer anderen Endstellung ein Entlüften der Luftfederbälge (3) bewirkt.

## Patentansprüche

1. Ventileinrichtung (1) für eine Luftfederungseinrichtung für ein Fahrzeug mit einem manuell betätigbaren Belüftungsventil (10, 34, 46) zum Belüften von Luftfederbälgen (3) der Luftfederungseinrichtung, einem manuell betätigbaren Entlüftungsventil (11, 35, 47) zum Entlüften der Luftfederbälge (3) sowie einem ersten elektrisch betätigbaren Ventil (7, 32, 44), wobei das Belüftungsventil (10, 34, 46), das Entlüftungsventil (11, 35, 47) und das erste elektrisch betätigbare Ventil (7, 32, 47) in einem gemeinsamen Gehäuse (55) angeordnet sind, **dadurch gekennzeichnet, dass** ein zweites elektrisch betätigbares Ventil (6, 33, 45) in dem Gehäuse (55) angeordnet ist, wobei das erste und das zweite elektrisch betätigbare Ventil (6, 7, 32, 33, 44, 45) zum Belüften und Entlüften der Luftfederbälge (3) betätigbar ist, wobei ein Relaisventil (40) vorgesehen ist, das einen Drucklufteinlass (41), einen Druckluftauslass (42) sowie einen druckluftbetätigbaren Steueranschluss (43) aufweist, wobei der Druckluftauslass (42) über eine Druckluft-Verbindungsleitung mit dem Steueranschluss (43) verbindbar ist, wobei in der Druckluft-Verbindungsleitung von dem Druckluftauslass (42) zu dem Steueranschluss (43) wenigstens eines der Ventile Belüftungsventil (46), Entlüftungsventil (47), erstes elektrisch betätigbares Ventil (44) oder zweites elektrisch betätigbares Ventil (45) angeordnet ist.

2. Ventileinrichtung nach Anspruch 1, **dadurch gekennzeichnet, dass** das Gehäuse (55) separate Druckluftanschlüsse (52, 54) für die Druckluftversorgung der elektrisch betätigbaren Ventile (6, 7, 32, 44) einerseits und der manuell betätigbaren Ventile (10, 11, 34, 35, 46, 47) andererseits aus einer Druckmittelquelle (2) aufweist.

3. Ventileinrichtung nach Anspruch 1, **dadurch gekennzeichnet, dass** das Relaisventil (40) in dem Gehäuse (55) angeordnet ist.

4. Ventileinrichtung nach wenigstens einem der vorhergehenden Ansprüche, **dadurch gekennzeichnet, dass** ein berührungslos arbeitender Wegsensor (22) zur Sensierung des Abstandes der Ventileinrichtung (1) von der Fahrbahn in dem Gehäuse (55) vorgesehen ist.

5. Verwendung einer Ventileinrichtung nach wenigstens einem der vorhergehenden Ansprüche in einer Luftfederungseinrichtung mit einem Luftfederventil (53), wobei ein Drucklufteinlass des ersten elektrisch betätigbaren Ventils (7, 32, 44) über einen Druckluftanschluss (52) des Gehäuses (55) mit dem Luftfederventil (53) verbunden ist.

6. Verwendung einer Ventileinrichtung nach wenigstens einem der Ansprüche 1 bis 7 in einer Luftfederungseinrichtung mit einer elektronisch gesteuerten Niveauregelung mit einer elektronischen Steuereinrichtung (5), wobei das erste und das zweite elektrisch betätigbare Ventil (6, 7, 32, 33, 44, 45) von der elektronischen Steuereinrichtung (5) zum Belüften und Entlüften der Luftfederbälge (3) betätigbar ist.

7. Verwendung einer Ventileinrichtung nach Anspruch 6, **dadurch gekennzeichnet, dass** ein Drucklufteinlass des ersten elektrisch betätigbaren Ventils (7, 32, 44) über einen Druckluftanschluss (52) des Gehäuses (55) mit einer Druckmittelquelle (2) verbunden ist.

## Claims

1. Valve device (1) for an air suspension device for a vehicle having a manually operable air-intake valve (10, 34, 46) for supplying air to air suspension bellows (3) of the air suspension device, having a manually operable air-discharge valve (11, 35, 47) for discharging air from the air suspension bellows (3) and having a first electrically actuatable valve (7, 32, 44), wherein the air-intake valve (10, 34, 46), the air-discharge valve (11, 35, 47) and the first electrically actuatable valve (7, 32, 47) are arranged in a common housing (55), **characterized in that** a second electrically actuatable valve (6, 33, 45) is arranged in the housing (55), the first and the second electrically actuatable valves (6, 7, 32, 33, 44, 45) being actuatable to supply air to and discharge air from the air suspension bellows (3), wherein a relay valve (40) is provided which has a compressed air inlet (41), a compressed air outlet (42) and a compressed-air-actuatable control port (43), the compressed air outlet (42) being connectible to the control port (43) by means of a compressed air connection line, wherein in the compressed air connection line from the compressed air outlet (42) to the control port (43) there is arranged at least one of the valves: air-intake valve (46), air-discharge valve (47), first electrically actuatable valve (44) and second electrically actuatable valve (45).

2. Valve device according to claim 1, **characterized in that** the housing (55) has separate compressed air ports (52, 54) for the provision of compressed air to the electrically actuatable valves (6, 7, 32, 44) on the one hand and to the manually operable valves (10, 11, 34, 35, 46, 47) on the other hand from a pressure medium source (2).

3. Valve device according to claim 1, **characterized in that** the relay valve (40) is arranged in the housing (55).

4. Valve device according to at least one of the preceding claims, **characterized in that** a contactlessly-operating position sensor (22) for sensing the distance of the valve device (1) from the roadway is provided in the housing (55).

5. Use of a valve device according to at least one of the preceding claims in an air suspension device having an air suspension valve (53), a compressed air inlet of the first electrically actuatable valve (7, 32, 44) being connected to the air suspension valve (53) by means of a compressed air port (52) of the housing (55).

6. Use of a valve device according to at least one of claims 1 to 4 in an air suspension device having an electronically controlled level-regulation means with an electronic control device (5), the first and the second electrically actuatable valves (6, 7, 32, 33, 44, 45) being actuatable by the electronic control device (5) to supply air to and discharge air from the air suspension bellows (3).

7. Use of a valve device according to claim 6, **characterized in that** a compressed air inlet of the first electrically actuatable valve (7, 32, 44) is connected to a pressure medium source (2) by means of a compressed air port (52) of the housing (55).

## Revendications

1. Dispositif de vanne (1) destiné à un système de suspension pneumatique pour un véhicule, comprenant une vanne de fourniture d'air (10, 34, 46) pouvant être actionnée manuellement pour alimenter en air des soufflets de ressort pneumatique (3) du système de suspension pneumatique, une vanne de purge ou d'évacuation d'air (11, 35, 47) pouvant être actionnée manuellement pour évacuer l'air des soufflets de ressort pneumatique (3) ainsi qu'une première vanne (7, 32, 44) pouvant être actionnée électriquement, la vanne de fourniture d'air (10, 34, 46), la vanne d'évacuation d'air (11, 35, 47) et la première vanne à actionnement électrique (7, 32, 44) étant agencées dans un carter commun (55), **caractérisé en ce qu'**une deuxième vanne (6, 33, 45) pouvant être actionnée électriquement est agencée dans le carter (55), la première et la deuxième vanne à actionnement électrique (6, 7, 32, 33, 44, 45) pouvant être actionnées pour la fourniture d'air aux soufflets de ressort pneumatique (3) et l'évacuation d'air de ceux-ci, une vanne relais (40) étant prévue, laquelle présente une entrée d'air comprimé (41), une sortie d'air comprimé (42) ainsi qu'un raccord de commande (43) pouvant être actionné par l'air comprimé, la sortie d'air comprimé (42) pouvant être reliée au raccord de commande (43) par l'intermédiaire d'une conduite de liaison d'air comprimé, dans la conduite de liaison d'air comprimé de la sortie d'air comprimé (42) au raccord de commande (43) étant agencée au moins l'une des vannes vanne de fourniture d'air (46), vanne d'évacuation d'air (47), première vanne à actionnement électrique (44) ou deuxième vanne à actionnement électrique (45).

2. Dispositif de vanne selon la revendication 1, **caractérisé en ce que** le carter (55) présente des raccords de branchement d'air comprimé (52, 54) séparés pour l'alimentation en air comprimé des vannes à actionnement électrique (6, 7, 32, 44) d'une part et des vannes à actionnement manuel (10, 11, 34, 35, 46, 47) d'autre part, à partir d'une source d'agent de pression (2).

3. Dispositif de vanne selon la revendication 1, **caractérisé en ce que** la vanne relais (40) est agencée dans le carter (55).

4. Dispositif de vanne selon l'une au moins des revendications précédentes, **caractérisé en ce qu'**un détecteur de déplacement (22) fonctionnant sans contact pour détecter la distance du dispositif de vanne (1) à la chaussée ou voie de circulation, est prévu dans le carter (55).

5. Utilisation d'un dispositif de vanne selon l'une au moins des revendications précédentes, dans un système de suspension pneumatique comprenant une vanne de ressort pneumatique (53), l'entrée d'air comprimé de la première vanne à actionnement électrique (7, 32, 44) étant reliée, par l'intermédiaire d'un raccord de branchement d'air comprimé (52) du carter (55), à la vanne de ressort pneumatique (53).

6. Utilisation d'un dispositif de vanne selon l'une au moins des revendications 1 à 4, dans un système de suspension pneumatique avec une régulation de niveau commandée par voie électronique comprenant un dispositif de commande électronique (5), la première et la deuxième vanne à actionnement électrique (6, 7, 32, 33, 44, 45) pouvant être actionnées par le dispositif de commande électronique (5) pour alimenter en air les soufflets de ressort pneumatique (3) ou en évacuer l'air.

7. Utilisation d'un dispositif de vanne, selon la revendication 6, **caractérisée en ce qu'**une entrée d'air comprimé de la première vanne à actionnement électrique (7, 32, 44) est reliée, par l'intermédiaire d'un raccord de branchement d'air comprimé (52) du carter (55), à une source d'agent de pression (2).
